# EUROPÄISCHE PATENTSCHRIFT

(11) **EP 3 685 062 B1**
(45) Veröffentlichungstag und Bekanntmachung des Hinweises auf die Patenterteilung: **10.11.2021**
(21) Anmeldenummer: 18779192.6
(22) Anmeldetag: 13.09.2018
(51) Int. Cl.: F16C 19/06, F16C 33/64

(54) **VERFAHREN ZUR HERSTELLUNG EINES LAGERBAUTEILS SOWIE LAGERBAUTEIL**
METHOD FOR PRODUCING A BEARING COMPONENT AND A BEARING COMPONENT
PROCEDE DE FABRICATION D'UN COMPOSANT DE PALIER ET COMPOSANT DE PALIER

(30) Priorität: 19.09.2017 DE 102017121629
(43) Veröffentlichungstag der Anmeldung: 29.07.2020
(73) Patentinhaber: Schaeffler Technologies AG & Co. KG, 91074 Herzogenaurach (DE)
(72) Erfinder: HAAG, Bertram, 91486 Uhlfeld (DE); GESCHWINDNER, Peter, 91052 Erlangen (DE); BLASS, Toni, 97493 Bergrheinfeld (DE); MERK, Daniel, 97291 Thüngersheim (DE)
(86) Internationale Anmeldenummer: PCT/DE2018/100781
(87) Internationale Veröffentlichungsnummer: WO 2019/057242

(56) Entgegenhaltungen:
- DE-A1-102010 031 439
- DE-A1-102011 080 750
- GB-A- 1 081 414
- US-A- 3 319 314

## Beschreibung

Die Erfindung betrifft ein Verfahren zur Herstellung eines Lagerbauteils, wobei ein Lagerbauteilrohling ein metallisches Substrat auf Eisenbasis und eine Konversionsschicht aufweist, wobei die Konversionsschicht zumindest bereichsweise auf dem metallischen Substrat ausgebildet ist und eine Ausgangsschichtdicke aufweist. Ferner betrifft die Erfindung ein Lagerbauteil.

Lagerbauteile und Wälzlager werden in einer Vielzahl von Alltagsgegenständen und für industrielle Zwecke angewandt, beispielsweise in Windkraftgeneratoren oder Radlagern. Solche Lagerbauteile weisen eine Lebensdauer auf, wobei man unter einer solchen Lebensdauer die Anzahl der Umdrehungen oder Betriebsstunden versteht, bis es zu einem Versagen kommt. Häufig basiert der Ausfall des Lagerbauteils auf einer Werkstoffschädigung und/oder Werkstoffermüdung. Ein häufiges Phänomen einer solchen Werkstoffschädigung sind weiß anätzende Risse (in Englisch: white-etchingcracks, abgekürzt WEC). Im Stand der Technik wird auf solche Früh-Ermüdungserscheinungen durch das Aufbringen von Passivierungsschichten geantwortet, beispielsweise mittels Brünieren. Dennoch kann es auch bei Lagerbauteilen mit einer solchen Passivierungsschicht zu Materialermüdungserscheinungen kommen, insbesondere auch in der Anfangszeit.

Die Druckschrift DE 10 2007 055 575 A1 beschreibt ein Laufbahnelement einer Wälzlagerung, wobei das Laufbahnelement wenigstens eine Abrollbahn aufweist, wobei auf der Abrollbahn Wälzkörper aus Stahl vorgesehen sind. Das Laufbahnelement ist dabei derart ausgebildet, dass es in einem gesamten Tiefenbereich von 0 bis ca. 40 Mikrometer unter der Oberfläche der Abrollbahn Druckeigenspannungen in Höhe von mindestens 400 Megapascal aufweist.

DE 10 2011 080750 A1 offenbart ein Verfahren gemäß dem Oberbegriff des Anspruchs 1.

DE 10 2010 031439 A1, GB 1 081 414 A und US 3 319 314 A offenbaren jeweils unterschiedliche Verfahren zur Herstellung eines Lagerbauteils.

Der Erfindung liegt die Aufgabe zugrunde, ein Verfahren zur Herstellung eines Lagerbauteils und ein Lagerbauteil bereitzustellen, welches eine verlängerte Lebensdauer aufweist. Insbesondere soll das Verfahren zur Herstellung des Lagerbauteils ein Lagerbauteil bereitstellen, welches über eine ermüdungsunanfällige Schutzschicht verfügt.

Diese Aufgabe wird durch das Verfahren zur Herstellung eines Lagerbauteils mit den Merkmalen des Anspruchs 1 gelöst. Bevorzugte und/oder vorteilhafte Ausführungsformen der Erfindung ergeben sich aus den Unteransprüchen, der nachfolgenden Beschreibung und/oder den beigefügten Figuren.

Die Aufgabe wird demnach für das erfindungsgemäße Verfahren zur Herstellung eines Lagerbauteils dadurch gelöst, dass ein Lagerbauteilrohling ein metallisches Substrat auf Eisenbasis und eine Konversionsschicht aufweist, wobei die Konversionsschicht zumindest bereichsweise auf dem metallischen Substrat ausgebildet ist und eine Ausgangsschichtdicke aufweist, wobei als Konversionsschicht eine Brünierschicht auf Eisenoxidbasis gebildet wird, die durch zumindest bereichsweise Behandlung des metallischen Substrats mittels eines alkalischen Behandlungsbads erzeugt wird. Zum Erhalten des Lagerbauteils wird das metallische Substrat des Lagerbauteilrohlings gehärtet und der Lagerbauteilrohling zumindest in einem Bereich der Konversionsschicht mittels eines kugelförmigen Körpers überrollt, wobei die Konversionsschicht in diesem Bereich verdichtet wird und eine Schutzschicht des Lagerbauteils mit einer Endschichtdicke bildet, wobei die Endschichtdicke kleiner als 95 Prozent der Ausgangsschichtdicke ist.

Insbesondere ist das Lagerbauteil ein Bauteil eines Wälzlagers oder eines Gleitlagers, insbesondere ein Lagerring, ein Laufbahnelement oder ein Wälzkörper.

Das Lagerbauteil basiert insbesondere auf einem Lagerbauteilrohling. Der Lagerbauteilrohling weist ein metallisches Substrat auf Eisenbasis und eine Konversionsschicht auf. Eine Konversionsschicht wird durch eine chemische Umwandlung des Materials des metallischen Substrats an dessen Oberfläche ausgebildet, insbesondere durch eine Oxidation des metallischen Substrats an dessen Oberfläche ausgebildet. Das metallische Substrat auf Eisenbasis ist insbesondere aus Stahl oder Edelstahl, vorzugsweise aus Lagerstahl, gebildet. Der Lagerbauteilrohling ist vorzugsweise ein gedrehter Lagerbauteilrohling, ein geschliffener Lagerbauteilrohling und/oder ein gehonter Lagerbauteilrohling.

Der Lagerbauteilrohling weist eine Konversionsschicht auf, wobei die Konversionsschicht vorzugsweise vollständig die Oberfläche des Lagerbauteilrohlings bedeckt. Alternativ ist die Konversionsschicht partiell oder abschnittsweise auf der Oberfläche des Lagerbauteilrohlings vorhanden. Die Konversionsschicht ist eine schwarze Randoxidationsschicht in Form einer Brünierschicht.

Ergänzend kann die Konversionsschicht ein, über eine Nachbehandlung der Konversionsschicht eingebrachtes organisches Material umfassen, wie beispielsweise einen Kunststoff. Die Konversionsschicht weist eine Ausgangsschichtdicke auf. Vorzugsweise ist die Ausgangsschichtdicke im gesamten Bereich des Lagerbauteilrohlings gleich groß. Die Ausgangsschichtdicke ist vorzugsweise größer als 0,5 Mikrometer, insbesondere größer als 1 Mikrometer. Die Konversionsschicht ist insbesondere plastisch formbar, und vorzugsweise nach dem plastischen Verformen durch Rollieren formstabil.

Das Lagerbauteil wird aus dem Lagerbauteilrohling durch Überrollen des Lagerbauteilrohlings erhalten, wobei die Konversionsschicht zumindest bereichsweise überrollt wird. Bei dem Überrollen wird die Konversionsschicht mit einer Kraft und/oder einem Druck beaufschlagt. Der Druck beim Überrollen ist insbesondere größer als 2000 Megapascal, vorzugsweise größer als 5000 Megapascal und im Speziellen größer als 7000 Megapascal.

Die Konversionsschicht bildet nach dem Überrollen eine Schutzschicht des Lagerbauteils. Die Schutzschicht ist damit von der durch das Überrollen verdichteten und geglätteten Konversionsschicht gebildet. Die Schutzschicht des Lagerbauteils weist eine Endschichtdicke auf. Insbesondere ist die Endschichtdicke der Schutzschicht in allen Bereichen des Lagerbauteils gleich groß. Die Endschichtdicke ist insbesondere kleiner als 1,8 Mikrometer, vorzugsweise kleiner als 1,5 Mikrometer und im Speziellen kleiner als 1 Mikrometer. Das Überrollen der Konversionsschicht wird derart ausgeführt, dass die Konversionsschicht so verdichtet wird, dass die Endschichtdicke eine Dicke aufweist, die kleiner als 95 % der Ausgangsschichtdicke, insbesondere auch kleiner als 90 % und im Speziellen kleiner als 80 % der Ausgangsschichtdicke beträgt.

Durch die Erfindung wird ein Verfahren zur Herstellung eines Lagerbauteils bereitgestellt, welches eine gleichmäßig verdichtete und kontinuierliche Schutzschicht aufweist. Das Überrollen der Konversionsschicht stellt beispielsweise ein mildes Einlaufen und/oder ein artefaktales Einlaufen unter festlegbaren Parametern des Lagerbauteils dar. Im Stand der Technik kommt es allerdings beim Einlaufen von beschichteten Lagerbauteilen in Ihrer eigentlichen Anwendung zu einem ungleichmäßigen Einlaufen, wobei die Konversionsschicht nicht überall gleichförmig verdichtet wird und somit die Schutzschicht nicht überall gleichförmig ausgebildet wird. Ferner kann es vorkommen, dass die Konversionsschicht eines Lagerbauteilrohlings beim Einbau aneckt und/oder ankantet, sodass die Konversionsschicht teilweise zerstört wird, und an den zerstörten und/oder beschädigten Abschnitten es schneller zu einer Ermüdung kommt. Durch das erfindungsgemäße gezielte Überrollen der Konversionsschicht kann hingegen eine kontinuierliche, besonders gleichförmige Schutzschicht ausgebildet werden und somit die Langzeitstabilität des Lagerbauteils erhöht werden.

Die Konversionsschicht ist eine Brünierschicht auf Eisenbasis, vorzugsweise umfassend Eisenoxid und im Speziellen umfassend ein Eisenmischoxid. Dabei wird zur Bildung der Brünierschicht ein zuvor gehärtetes metallisches Substrat auf Eisenbasis oberflächlich oxidiert. Weiterhin kann es vorgesehen sein, dass die Konversionsschicht mit organischem Material nachbehandelt ist, beispielsweise mit einer Kunststoffbeschichtung versehen ist, beispielsweise aus einem Lack oder Wachs. Aber auch eine Imprägnierung der Konversionsschicht mittels eines Schmiermittels, insbesondere einem Öl, Fett oder einem wasserverdrängenden Medium, kann vorhanden sein. Besonders bevorzugt ist es, wenn die Konversionsschicht eine Brünierschicht der Bezeichnung Durotect-B® (Eisenmischoxid, vorrangig Magnetit) aus dem Hause Schaeffler ist.

Das Härten des metallischen Substrats kann dabei mittels eines üblichen Härteverfahrens erfolgen. Insbesondere wird ein Einsatzhärten, ein induktives Härten, ein Carbonitrieren, ein Nitrieren, ein Carburieren, ein martensitisches Härten oder ein bainitisches Härten durchgeführt. Es hat sich gezeigt, dass das Härten des metallischen Substrats vor Ausbildung der Brünierschicht eine besonders gleichmäßige Verdichtung der Brünierschicht durch das Überrollen ermöglicht.

Insbesondere ist es vorgesehen, dass der kugelförmige Körper zum Überrollen der Brünierschicht Bestandteil eines hydrostatischen Glattwalz- oder Festwalzwerkzeugs ist. Insbesondere ist das hydrostatische Walzwerkzeug derart betreibbar, dass der Druck beim Überrollen gezielt einzustellen ist. Ferner kann es vorgesehen sein, dass der kugelförmige Körper des hydrostatischen Walzwerkzeugs auf der gesamten Oberfläche des Lagerbauteilrohlings abrollt, wobei dabei das hydrostatische Walzwerkzeug und/oder der Lagerbauteilrohling bewegt wird.

Insbesondere ist der kugelförmige Körperdurch eine Hartmetall- oder Keramikkugel gebildet. Im Speziellen ist das hydrostatische Walzwerkzeug mit einer Hartmetall- oder Keramikkugel als kugelförmigem Körper ausgebildet. Insbesondere kann es vorgesehen sein, dass das Walzwerkzeug eine Kugel aufweist, wobei die Kugel austauschbar ist und/oder der Kugeldurchmesser des Walzwerkzeuges änderbar ist. Beispielsweise kann das Walzwerkzeug mit Kugeln unterschiedlichen Durchmessers betrieben werden, wobei die Kugeln im Walzwerkzeug austauschbar sind und bei dem Austauschen der Kugeldurchmesser verändert werden kann. Beispielsweise weisen die Kugeln einen Durchmesser von größer 2 Millimeter oder größer 6 Millimeter oder größer 13 Millimeter auf.

Besonders bevorzugt ist es, dass durch das Überrollen die Konversionsschicht so verdichtet wird, dass die Schutzschicht eine Härte aufweist, die mindestens 120 % einer Härte der Konversionsschicht entspricht. Ferner ist es vorgesehen, dass die Härte der Schutzschicht mindestens 150 % der Härte der Konversionsschicht entspricht und im Speziellen, dass die Härte der Schutzschicht mindestens 200 % der Härte der Konversionsschicht entspricht. Durch die Erhöhung der Härte der Schutzschicht wird insbesondere die Wälzbelastbarkeit des Lagerbauteils erhöht.

Ferner kann durch das Überrollen die Konversionsschicht nicht nur verdichtet, sondern weiterhin die Rauigkeit der Oberfläche der Konversionsschicht reduziert werden. Insbesondere wird bei dem Überrollen der Konversionsschicht die Oberfläche geglättet, sodass die Schutzschicht eine geringere Rauigkeit als die Konversionsschicht aufweist.

Besonders bevorzugt ist es, dass durch das Überrollen die Konversionsschicht so verdichtet wird, dass das Lagerbauteil zumindest im Bereich der Schutzschicht unter der Oberfläche Druckeigenspannungen von mehr als 150 Megapascal aufweisen, vorzugsweise von mehr als 250 Megapascal und im Speziellen von mehr als 500 Megapascal. Vorzugsweise ist es vorgesehen, dass durch das Überrollen die Konversionsschicht und/oder der Lagerbauteilrohling Druckeigenspannungen von größer als 800 Megapascal und im Speziellen von größer als 1000 Megapascal aufweisen. Die Eigenspannung des Lagerbauteils und/oder der Schutzschicht ist insbesondere durch die Kugelgröße des Walzwerkzeugs einstellbar. Ferner kann durch einen Kühlflüssigkeitsdruck beim Überrollen die Eigenspannung eingestellt werden. Der Kühlflüssigkeitsdruck beim Überrollen ist insbesondere größer als 10 bar, und im Speziellen größer als 200 bar. Ferner ist es vorgesehen, dass der Kühlflüssigkeitsdruck kleiner ist als 450 bar.

Optional ist es vorgesehen, dass bei dem Überrollen der Lagerbauteilrohling schlupffrei überrollt wird. Dieser Ausgestaltung liegt die Überlegung zugrunde, dass bei dem üblichen Einlaufen im Stand der Technik eines Lagerbauteilrohlings mit einer Konversionsschicht in seiner eigentlichen Anwendung ein Schlupf auftritt, wobei es durch den Schlupf zu einer ungleichmäßigen Ausbildung der Schutzschicht kommt. Durch das kontrollierte, schlupffreie Einlaufen beim gezielten Überrollen des Lagerbauteilrohlings kann so gewährleistet werden, dass die Schutzschicht gleichmäßig ausgebildet ist und es zu einer geringen Ausfallrate kommt.

Eine Ausgestaltung der Erfindung sieht vor, dass dem Überrollen ein Passivierungsschritt zur Erzeugung der Konversionsschicht des Lagerbauteilrohlings vorrangeht. In diesem Passivierungsschritt wird eine Konversionsschicht erzeugt, wobei der Eisenwerkstoff des metallischen Substrats oberflächlich in ein Eisenoxid (Mischoxid) überführt wird. Insbesondere wird die metallische Oberfläche des metallischen Substrats bei dem Passivierungsschritt in eine amorphe Oxidschicht umgewandelt. Besonders bevorzugt ist es, dass bei dem Passivierungsschritt als amorphe Oxidschicht eine Eisenmischoxidschicht auf das Substrat erzeugt wird. Dazu wird der Lagerbauteilrohling mit einer heißen alkalischen Lösung behandelt, wobei bei dieser Behandlung das Metall des metallischen Substrats oberflächlich in ein Oxid überführt wird, das die Konversionsschicht bildet. Die Konversionsschicht, hergestellt mittels des Passivierungsschrittes, weist vorzugsweise eine Dicke von größer oder gleich 0,5 Mikrometer auf und ferner eine Dicke kleiner als 3 Mikrometer.

Ferner ist es insbesondere vorgesehen, dass dem Überrollen ein Lagerbauteilrohlingsherstellungsschritt vorangeht, wobei in dem Lagerbauteil-rohlingsherstellungsschritt der Lagerbauteilrohling mit einer Rohlingsgeometrie hergestellt wird, wobei das Lagerbauteil nach dem Überrollen eine Endgeometrie aufweist. Die Rohlingsgeometrie ist vorzugsweise verschieden von der Endgeometrie. Insbesondere ist die Rohlingsgeometrie so gewählt, dass das Lagerbauteil nach dem Walzen des Lagerbauteilrohlings die gewünschte Endgeometrie aufweist.

Einen weiteren Gegenstand der Erfindung bildet ein Lagerbauteil, welches nach dem erfindungsgemäßen Verfahren hergestellt ist. Das Lagerbauteil ist beispielsweise eine Wälzlagerkomponente und insbesondere eine Wälzlagerkomponente mit Laufbahn. Insbesondere ist das Lagerbauteil als ein Lagerring oder als ein Wälzkörper ausgebildet. Optional ist der Lagerring und/oder die Wälzlagerkomponente und/oder der Wälzkörper für ein Großwälzlager ausgebildet und/oder weist einen Teilkreisdurchmesser größer als 500 mm auf.

Vorzugsweise ist die Konversionsschicht ausschließlich oder mindestens auf der Laufbahn des Lagerrings aufgebracht. Insbesondere weist die gesamte Oberfläche des Wälzkörpers und/oder des Lagerrings die Konversionsschicht auf, wobei nur ein Teilabschnitt, insbesondere die Laufbahn des Lagerrings und/oder die Walzfläche des Wälzkörpers, überrollt wurde und die Schutzschicht aufweist. Besonders bevorzugt ist die Wälzlagerkomponente und/oder der Lagerring und/oder der Wälzkörper als Bauteil für eine Windkraftanlage, insbesondere für eine Rotorlagerung, ausgebildet und/oder bildet einen Bestandteil eines Kegelrollenlagers. Das Lagerbauteil weist eine Schutzschicht auf einem gehärteten metallischen Substrat auf, wobei die Schutzschicht durch das Überrollen der Konversionsschicht erzeugt ist.

Weitere Merkmale, Vorteile und Wirkungen der Erfindung ergeben sich aus der nachfolgenden Beschreibung bevorzugter Ausführungsbeispiele der Erfindung. Dabei zeigen:
Figur 1 eine schematische Ansicht der Bearbeitung eines Lagerbauteilrohlings zur Herstellung des Lagerbauteils;
Figur 2 eine schematische Detailansicht des Überrollens des Lagerbauteilrohlings;
Figur 3 Randzonenbeeinflussung durch das Überrollen des Lagerbauteilrohlings;
Figur 4 Eigenspannungen nach dem Überrollen im Lagerbauteil;
Figur 5 ein Flussdiagramm des Verfahrens;
Figur 6 eine schematische Schnittansicht eines Wälzlagers.

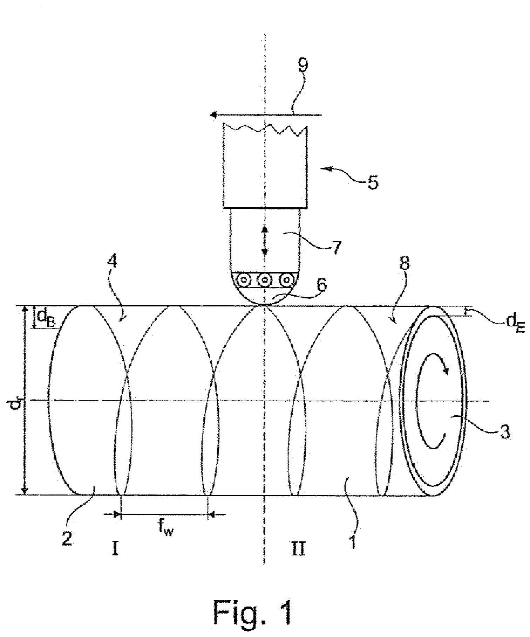

Figur 1 zeigt schematisch ein Lagerbauteil 1 und einen Lagerbauteilrohling 2 bei der Verfahrensdurchführung zur Herstellung des Lagerbauteils 1. Figur 1 ist in zwei Abschnitte I und II gegliedert, wobei Abschnitt I den Lagerbauteilrohling 2 zeigt und Abschnitt II das Lagerbauteil 1 zeigt. Lagerbauteil 1 ist insbesondere aus der verfahrensgemäßen Bearbeitung des Lagerbauteilrohling 2 hervorgegangen.

Der Lagerbauteilrohling 2 umfasst ein Substrat 3, wobei das Substrat 3 ein gehärtetes metallisches Substrat 3, beispielsweise ein Stahl ist. Insbesondere ist es auch möglich, dass das metallische Substrat 3 eine andere Metalllegierung auf Eisenbasis darstellt. Das gehärtete metallische Substrat 3 bildet hier eine Zylinderform aus. Auf der Oberfläche des Substrats 3, insbesondere auf der Zylindermantelfläche des metallischen Substrats 3, ist eine Konversionsschicht 4 in Form einer Brünierschicht ausgebildet. Die Konversionsschicht 4 ist hier, basierend auf dem Substrat 3 aus Stahl, aus einem Eisenmischoxid gebildet. Die Konversionsschicht 4 weist eine Dicke auf, wobei diese Dicke die Ausgangsschichtdicke d_{b} darstellt. Die Ausgangsschichtdicke d_{b} ist größer als 1,5 Mikrometer und im Speziellen größer als 0,5 Mikrometer. Metallisches Substrat 3 und Konversionsschicht 4 bilden zusammen den zylindrischen Lagerbauteilrohling 2, welcher einen Durchmesser dᵣ aufweist.

Der Lagerbauteilrohling 2 wird mittels eines Walzwerkzeugs 5 überrollt. Das Walzwerkzeug 5 weist eine Kugel 6 auf, welche in direktem Kontakt mit der Konversionsschicht 4 und damit mit dem Lagerbauteilrohling 2 steht. Das Walzwerkzeug 5 ist als ein hydrostatisches Walzwerkzeug 5 ausgebildet und weist einen hydrostatischen Teleskopausgleich 7 auf. Das Walzwerkzeug 5 beaufschlagt den Lagerbauteilrohling 2 mit einer Kraft F, wobei durch diese Beaufschlagung mit der Kraft F die Konversionsschicht 4 zur Schutzschicht 8 verdichtet wird.

Zum Überrollen des Lagerbauteilrohlings 2 wird der Lagerbauteilrohling 2 in Rotation versetzt, wobei die Rotation mit einer Drehzahl erfolgt. Insbesondere ist die Drehzahl einstellbar. Während der Rotation des Lagerbauteilrohlings 2 wird das Walzwerkzeug 5 in eine Vorschubrichtung 9 bewegt. Durch die Bewegung des Walzwerkzeuges 5 in Vorschubrichtung 9 während der Rotation des Lagerbauteilrohlings 2 wird mittels der Kugel 6 eine Oberfläche des Lagerbauteilrohlings 2 abgefahren. Als einstellbares Maß bei dem Verfahren zur Herstellung des Lagerbauteils 1 ist insbesondere der Vorschub f_{w} anzugeben, wobei der Vorschub f_{w} aus der Kombination von Drehzahl und Vorschubrichtung 9 bzw. Vorschubgeschwindigkeit einstellbar ist.

Durch das Überrollen des Lagerbauteilrohlings 2 wird die Konversionsschicht 4 verdichtet, geglättet und gehärtet. Die überrollte Konversionsschicht 4 bildet die Schutzschicht 8 aus. Die Schutzschicht 8 weist eine Dicke auf, wobei diese Dicke die Endschichtdicke dₑ bildet. Die Endschichtdicke dₑ ist kleiner als 80 % der Ausgangsschichtdicke d_{b}. Während die Konversionsschicht 4 des Lagerbauteilrohlings 2 verformbar und stoßempfindlich ist, ist die Schutzschicht 8 unverformbar und stoßunempfindlich. Die Schutzschicht 8 ist damit durch die verdichtete Konversionsschicht 4 gebildet.

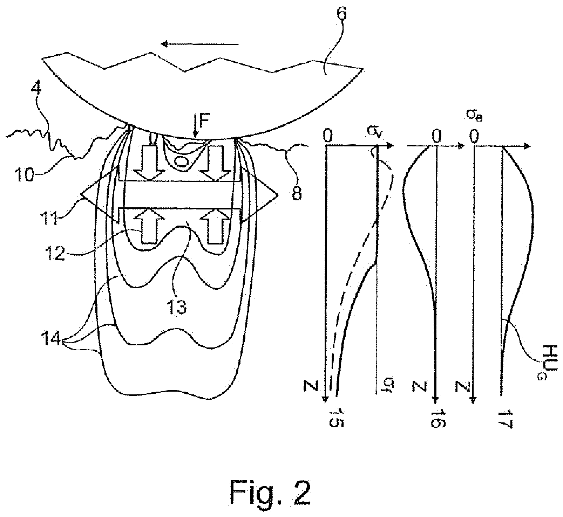

Zur Erzeugung der Schutzschicht 8 aus der Konversionsschicht 4 wird der Lagerbauteilrohling 2 überrollt, wobei das Überrollen mit geeigneten Parametern erfolgt, die benötigt werden, um beim Überrollen die gewünschten Materialeigenschaften zu erreichen. In den Figuren 2 bis 4 sind erhältliche Eigenschaften des Lagerbauteils 1 mit den entsprechenden Parametern dargestellt.

Figur 2 zeigt einen Detailausschnitt der Konversionsschicht 4, der Schutzschicht 8 und der Kugel 6. Die Konversionsschicht 4 weist eine raue Oberfläche auf, wobei diese raue Oberfläche tiefe Kerben und Gräben 10 aufweist. Nach dem Überrollen weist die gebildete Schutzschicht 8 eine relativ glatte Oberfläche mit einer geringeren Rauigkeit auf. Die Kugel 6 beaufschlagt die Oberfläche des Lagerbauteilrohlings 2 im Bereich der Konversionsschicht 4 mit einer Kraft F. Die Kraft F ist insbesondere größer als 5000 Megapascal.

Im Inneren des Lagerbauteilrohlings 2 und/oder des Lagerbauteils 1 herrscht während des Überrollens im entsprechenden Bereich eine Mehrzahl an Beanspruchungen vor. Dabei ist als eine Beanspruchung die Zugbeanspruchung 11 zu nennen, die im Wesentlichen gleichgerichtet zur Oberfläche, also zur Konversionsschicht 4 bzw. Schutzschicht 8 gerichtet ist. Die Druckbeanspruchung 12 ist gegengerichtet zur Kraft F. Ferner sind in dieser Figur Gebiete plastischer Verformung 13 eingezeichnet sowie Linien gleicher Vergleichsspannung 14 angezeichnet, wobei diese einen ähnlichen Formverlauf aufweisen.

Im rechten Teil der Figur 2 sind drei Diagramme eingezeichnet, wobei das Diagramm 15 die Vergleichsspannung σᵥ versus den Oberflächenabstand Z zeigt, das Diagramm 16 die Eigenspannung σₑ versus Oberflächenabstand Z zeigt und das Diagramm 17 die Härte HU versus den Oberflächenabstand Z zeigt.

In Diagramm 15 ist erkenntlich, dass die Vergleichsspannung σᵥ bezüglich des Oberflächenabstands Z einen relativ komplizierten Verlauf einnimmt. Dabei ist die Vergleichsspannung σᵥ relativ zu einer Fließspannung σ_{f} zu betrachten. Im Bereich der Oberfläche ist die Vergleichsspannung σᵥ etwas geringer als die Fließspannung σ_{f}. Mit zunehmendem Oberflächenabstand Z ist die Vergleichsspannung σᵥ größer als die Fließspannung σ_{f}, wobei mit weiter zunehmendem Oberflächenabstand Z die Vergleichsspannung σᵥ die Fließspannung σ_{f} wieder unterschreitet und sich einem Minimalwert nähert. Der Bereich des Oberflächenabstands, bei welchem die Vergleichsspannung σᵥ größer ist als die Fließspannung σ_{f}, stellt einen ideal elastischen Bereich dar, wobei der Bereich, in dem die Vergleichsspannung σᵥ kleiner ist als die Fließspannung σ_{f}, einen real plastischen Bereich darstellt.

Das Diagramm 16 gibt die Eigenspannung σₑ relativ zum Oberflächenabstand Z an. Dabei ist erkenntlich, dass die Eigenspannung σₑ von der Oberfläche ins Innere des Lagerbauteils 1 stets negativ ist und von einem Startwert weiter fällt und ein Minimum einnimmt, wobei von diesem Minimum sich die Eigenspannung σₑ der 0 nähert. Der Punkt größter Eigenspannung σₑ ist damit etwas von der Oberfläche entfernt.

Das Diagramm 17 zeigt die Härte HU versus Oberflächenabstand Z. Dazu ist als Vergleichswert eine Grundhärte HU_{G} angegeben. Die Härte ist an der Oberfläche des Lagerbauteils 1 identisch zur Grundhärte HU_{G}, wobei von dort aus die Härte HU mit zunehmenden Oberflächenabstand zunimmt und ein Maximum anstrebt, wobei von diesem Maximum an die Härte HU wieder zur Grundhärte HU_{G} strebt.

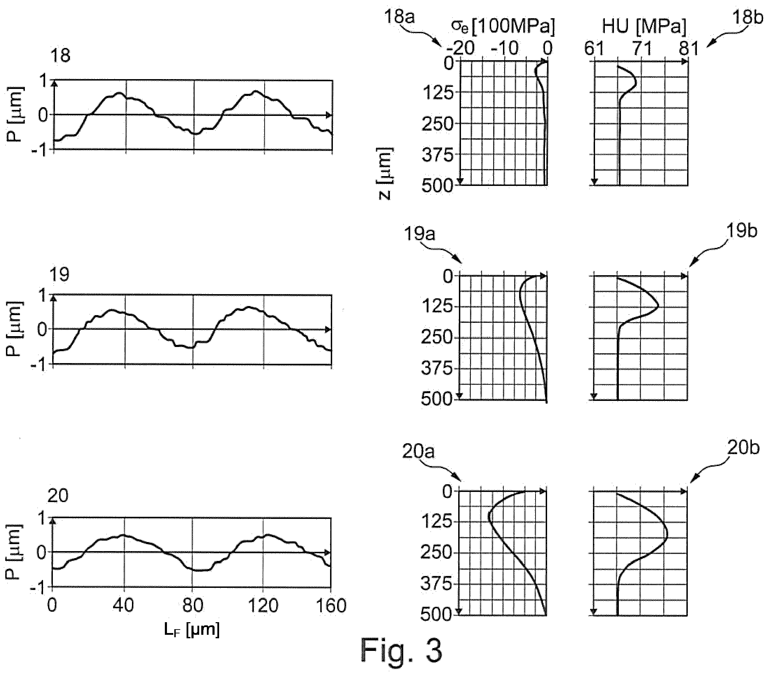

Figur 3 zeigt mehrere Diagramme 18, 19, 20 der Oberflächenrauigkeit P der Schutzschicht 8 erhalten durch Walzen der Konversionsschicht 4 mit unterschiedlicher Kraft F. Diagramm 18 zeigt die Oberflächenrauigkeit P entlang eines Vorschubwegs L_{F}. Durch das Überrollen mit zehn Megapascal ergibt sich eine gemittelte Rautiefe von 1,40 Mikrometer.

Im Diagramm 19 ist die Oberflächenrauigkeit P entlang des Vorschubwegs L_{F} für ein Lagerbauteil, überrollt mit einer Kraft F von zwanzig Megapascal, dargestellt. Hierbei ergibt sich eine gemittelte Rautiefe von 1,28 Mikrometer. Im Diagramm 20 ist die Oberflächenrauigkeit P für ein Lagerbauteil 1, überrollt mit 40 Megapascal, dargestellt entlang des Vorschubweges L_{F}. Für die Schutzschicht 8 ergibt sich eine gemittelte Rautiefe von 0,98 Mikrometer. Dabei ist ersichtlich, dass mit Zunahme der Kraft F die Oberflächenrauigkeit P, im Speziellen die gemittelte Rautiefe abnimmt.

Das Diagramm 18a zeigt den Verlauf der Eigenspannung versus den Oberflächenabstand Z für die Kraft F von zehn Megapascal, während das Diagramm 18b die Härte HU für die Überrollung mit der Kraft F von zehn Megapascal zeigt. Das Diagramm 19a zeigt die Eigenspannung für eine Kraft F von zwanzig Megapascal und das Diagramm 20a zeigt die Eigenspannung für eine Kraft F von 40 Megapascal. Dabei ist ersichtlich, dass mit Zunahme der Kraft F auch die Eigenspannung zunimmt, wobei sich das Maximum der Eigenspannung mit Zunahme der Kraft F auch in das Innere des Lagerbauteils 1 und/oder der Schutzschicht 8 verschiebt.

Das Diagramm 19b zeigt die Härte HU für die Kraft F von 20 Megapascal, während das Diagramm 20b die Härte HU für die Kraft F von 40 Megapascal zeigt. Dabei ist ersichtlich, dass mit Zunahme der Kraft F die Härte HU zunimmt und sich das Maximum der Härte HU mit Zunahme der Kraft F ins Innere des Lagerbauteils 1 und/oder der Schutzschicht 8 verschiebt.

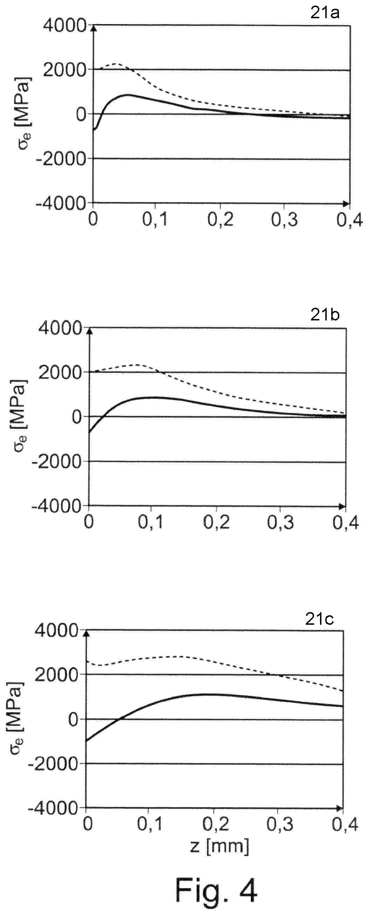

Figur 4 zeigt die Eigenspannungen σₑ versus Oberflächenabstand Z für unterschiedliche Durchmesser der Kugel 6. Im Diagramm 21a ist die Eigenspannung für eine Kraft F von zehn Megapascal bei einem Durchmesser von drei Millimetern der Kugel 6 dargestellt. Im Diagramm 21b ist die Eigenspannung σₑ für eine Kraft F von 10 Megapascal bei einem Durchmesser der Kugel 6 von sechs Millimetern dargestellt und in Figur 21c ist die Eigenspannung σₑ für eine Kraft F von 10 Megapascal bei einem Durchmesser der Kugel 6 von 13 Millimetern dargestellt. Hierbei ist ersichtlich, dass für die gleiche Kraft F von 10 Megapascal bei einer Zunahme des Durchmessers der Kugel 6 sich für kleine Oberflächenabstände Z eine flachere Steigung der Eigenspannung σₑ ergibt und der Abfall vom Maximum der Eigenspannung σₑ für größere Durchmesser flacher verläuft.

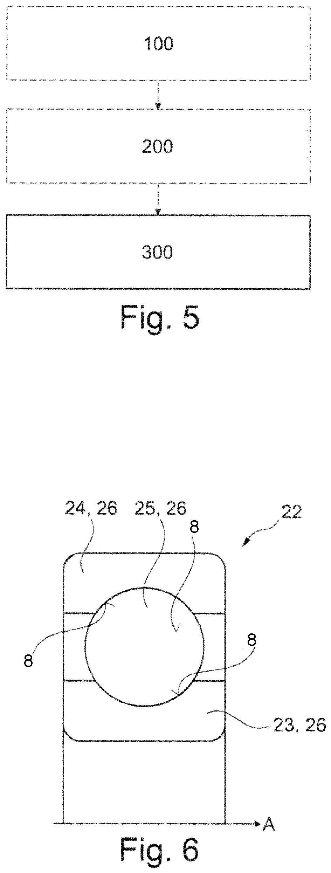

Figur 5 zeigt schematisch einen Ablauf des vorgeschlagenen Verfahrens als ein Ausführungsbeispiel. In einem Herstellungsschritt 100 wird aus einem metallischen Werkstoff auf Eisenbasis ein metallisches Substrat 3 hergestellt. Dabei kann der Herstellungsschritt 100 ein Drehen, Honen, Fräßen, Stemmen und/oder Formen des Werkstoffs zu dem metallischen Substrat 3 umfassen. Das metallische Substrat 3 wird anschließend gehärtet. In einen Passivierungsschritt 200 wird das gehärtete metallische Substrat 3 mit einer Konversionsschicht 4 versehen. Dazu wird das metallische Substrat 3 in einer alkalischen Lösung behandelt, wobei sich die Oberfläche des metallischen Substrats 3 in ein Metalloxid umwandelt, das die Konversionsschicht 4 ausbildet. Das metallische Substrat 3 mit Konversionsschicht 4 bildet dabei den Lagerbauteilrohling 2. In einem Überrollschritt 300 wird der Lagerbauteilrohling 2 zumindest in einem Bereich der Konversionsschicht 4 überrollt. Insbesondere werden nur Abschnitte des Lagerbauteilrohlings 2 überrollt, wie zum Beispiel nur die Lauffläche eines Wälzlagerrings oder die Walzflächen eines Wälzkörpers. Im Überrollschritt 300 wird die Konversionsschicht 4 zu der Schutzschicht 8 verdichtet, wobei durch den Überrollschritt 300 der Lagerbauteilrohling 2 in das Lagerbauteil 1 übergeht.

Figur 6 zeigt schematisch einen Schnitt durch ein Wälzlager 22. Das Wälzlager 22 umfasst einen Innenring 23 und einen Außenring 24. Der Innenring 23 und der Außenring 24 sind konzentrisch zueinander angeordnet und drehbar um eine gemeinsame Achse A relativ zueinander verdrehbar. Zwischen dem Innenring 23 und dem Außenring 24 sind eine Mehrzahl von Wälzkörpern 25 angeordnet. Der Innenring 23, der Außenring 24 und die Wälzkörper 25 bilden jeweils ein Lagerbauteil 26. Die Lagerbauteile 26 weisen an ihrer Oberfläche jeweils die Schutzschicht 8 auf. Der Innenring 23 und der Außenring 24 weisen die Schutzschicht 8 jeweils auf der Laufbahn auf, wobei die Laufbahn eine Abrollfläche für die Wälzkörper 25 aufweist und/oder bildet. Die Wälzkörper 25 weisen die Schutzschicht 8 auf der gesamten Wälzfläche auf, wobei für die hier kugelförmigen Wälzkörper 25 die gesamte Oberfläche der Wälzkörper 25 von der Schutzschicht 8 bedeckt ist.

### Bezugszeichenliste

- 1, 26: Lagerbauteil
- 2: Lagerbauteilrohling
- 3: metallisches Substrat
- 4: Konversionsschicht
- 5: Walzwerkzeug
- 6: Kugelförmiger Körper oder Kugel
- 7: Teleskopausgleich
- 8: Schutzschicht
- 9: Vorschubrichtung
- 10: Gräben
- 11: Zugbeanspruchung
- 12: Druckbeanspruchung
- 13: Verformung
- 14: Vergleichsspannung
- 15: Diagramm
- 16: Diagramm
- 17: Diagramm
- 18a,b: Diagramm
- 19a,b: Diagramm
- 20a,b: Diagramm
- 21a,b,c: Diagramm
- 22: Wälzlager
- 23: Innenring
- 24: Außenring
- 25: Wälzkörper

- I: erster Abschnitt
- II: zweiter Abschnitt
- d_{b}: Ausgangsschichtdicke
- dᵣ: Durchmesser
- F: Kraft
- f_{w}: Vorschub
- dₑ: Endschichtdicke
- σᵥ: Vergleichsspannung
- Z: Oberflächenabstand
- σₑ: Eigenspannung
- HU: Härte
- σv: Vergleichsspannung
- σ_{f}: Fließspannung
- HU_{G}: Grundhärte
- L_{F}: Vorschubweg
- A: Achse
- P: Oberflächenrauigkeit

## Patentansprüche

1. Verfahren zur Herstellung eines Lagerbauteils (1),
wobei ein Lagerbauteilrohling (2) ein metallisches Substrat (3) auf Eisenbasis und eine Konversionsschicht (4) aufweist, wobei die Konversionsschicht (4) zumindest bereichsweise auf dem metallischen Substrat (3) ausgebildet ist und eine Ausgangsschichtdicke (d_{b}) aufweist, wobei als Konversionsschicht (4) eine Brünierschicht auf Eisenoxidbasis gebildet wird, die durch zumindest bereichsweise Behandlung des metallischen Substrats (3) mittels eines alkalischen Behandlungsbads erzeugt wird, **dadurch gekennzeichnet, dass** zum Erhalten des Lagerbauteils (1) das metallische Substrat (3) des Lagerbauteilrohlings (2) gehärtet wird und der Lagerbauteilrohling (2) zumindest in einem Bereich der Konversionsschicht (4) mittels eines kugelförmigen Körpers (6) überrollt wird, dass die Konversionsschicht (4) in diesem Bereich verdichtet wird und eine Schutzschicht (8) des Lagerbauteils (1) mit einer Endschichtdicke (dₑ) bildet, und dass die Endschichtdicke (dₑ) kleiner als 95 Prozent der Ausgangsschichtdicke (d_{b}) ist.

2. Verfahren nach Anspruch 1, wobei der kugelförmige Körper (6) Bestandteil eines hydrostatischen Glatt- oder Festwalzwerkzeugs (5) ist.

3. Verfahren nach einem der vorherigen Ansprüche, wobei ein kugelförmiger Körper (6) aus einem Hartmetall oder einer Keramik eingesetzt wird.

4. Verfahren nach einem der vorherigen Ansprüche, wobei durch das Überrollen die Konversionsschicht (4) so verdichtet wird, dass die Schutzschicht (8) eine Härte (HU) aufweist, die mindestens 150 Prozent einer Härte (HU) der Konversionsschicht (4) entspricht.

5. Verfahren nach einem der vorherigen Ansprüche, wobei durch das Überrollen die Konversionsschicht (4) so verdichtet wird, dass das Lagerbauteil (1) zumindest im Bereich der Schutzschicht (8) eine Eigenspannung (σₑ) größer 500 Megapascal aufweist.

6. Verfahren nach einem der vorherigen Ansprüche, wobei der Lagerbauteilrohling (2) im Bereich der Konversionsschicht (4) schlupffrei überrollt wird.

7. Verfahren nach einem der vorherigen Ansprüche, wobei dem Überrollen ein Lagerbauteilrohlingsherstellungsschritt vorangeht, wobei in dem Lagerbauteilrohlingherstellungsschritt der Lagerbauteilrohling (2) mit einer Rohlingsgeometrie hergestellt wird, wobei der Lagerbauteilrohling (2) nach dem Überrollen das Lagerbauteil (1) mit einer Endgeometrie bildet.

8. Verfahren nach einem der vorherigen Ansprüche, wobei der Druck beim Überrollen der Konversionsschicht (4) größer als 2000 Megapascal gewählt wird.

## Claims

1. A method for producing a bearing component (1),
wherein a bearing component blank (2) has an iron-based metal substrate (3) and a conversion layer (4), wherein the conversion layer (4), at least in some areas, is formed on the metal substrate (3) and has a starting layer thickness (db), wherein an iron-oxide-based burnishing layer is formed as a conversion layer (4) and is produced by treatment, at least in some areas, of the metal substrate (3) by means of an alkaline treatment bath, **characterized in that**, so as to obtain the bearing component (1), the metal substrate (3) of the bearing component blank (2) is hardened and the bearing component blank (2), at least in one area of the conversion layer (4), is rolled over by means of a spherical body (6), so that the conversion layer (4) in this area is compressed and forms a protective layer (8) of the bearing component (1) with an end layer thickness (dₑ) and the end layer thickness (dₑ) is less than 95% of the starting layer thickness (d_{b}).

2. The method according to claim 1, wherein the spherical body (6) is a component of a hydrostatic smooth or deep rolling tool (5).

3. The method according to any one of the preceding claims, wherein a spherical body (6) made of a hard metal or ceramic is used.

4. The method according to any one of the preceding claims, wherein the conversion layer (4) is compressed by rolling such that the protective layer (8) has a hardness (HU) which corresponds to at least 150% of a hardness (HU) of the conversion layer (4).

5. The method according to any one of the preceding claims, wherein the rolling over compresses the conversion layer (4) such that the bearing component (1), at least in the area of the protective layer (8), has an internal stress (σₑ) greater than 500 MPa.

6. The method according to any one of the preceding clams, wherein the bearing component blank (2) is rolled over without slippage in the area of the conversion layer (4).

7. The method according to any one of the preceding claims, wherein rolling over is preceded by a bearing component blank production step, wherein in the bearing component blank production step, the bearing component blank (2) is produced with a blank geometry, wherein the bearing component blank (2) after rolling over forms the bearing component (1) with an end geometry.

8. The method according to any one of the preceding claims, wherein the chosen pressure during rolling over the conversion layer (4) is greater than 2000 MPa.

## Revendications

1. Procédé de fabrication d'un composant de palier (1),
dans lequel une ébauche de composant de palier (2) présente un substrat métallique (3) à base de fer et une couche de conversion (4), la couche de conversion (4) étant formée au moins par zones sur le substrat métallique (3) et présentant une épaisseur de couche initiale (d_{b}), une couche brunie à base d'oxyde de fer étant formée en tant que couche de conversion (4) et étant produite en traitant le substrat métallique (3) au moins par zones au moyen d'un bain de traitement alcalin, **caractérisé en ce que** le substrat métallique (3) de l'ébauche de composant de palier (2) est durci et l'ébauche de composant de palier (2) est traitée au rouleau au moyen d'un corps sphérique (6) au moins dans une zone de la couche de conversion (4) pour obtenir le composant de palier (1), **en ce que** la couche de conversion (4) est compactée dans cette zone et forme une couche de protection (8) du composant de palier (1) avec une épaisseur de couche finale (dₑ) et **en ce que** l'épaisseur de couche finale (dₑ) a une épaisseur inférieure à 95 pour cent de l'épaisseur de couche initiale (d_{b}).

2. Procédé selon la revendication 1, dans lequel le corps sphérique (6) fait partie d'un outil de laminage ou de lissage hydrostatique (5).

3. Procédé selon l'une quelconque des revendications précédentes, dans lequel est utilisé un corps sphérique (6) en métal dur ou en céramique.

4. Procédé selon l'une quelconque des revendications précédentes, dans lequel la couche de conversion (4) est compactée par le traitement au rouleau de telle sorte que la couche de protection (8) présente une dureté (HU) correspondant à au moins 150 pour cent d'une dureté (HU) de la couche de conversion (4).

5. Procédé selon l'une quelconque des revendications précédentes, dans lequel la couche de conversion (4) est compactée par le traitement au rouleau de telle sorte que le composant de palier (1) présente une contrainte interne (σₑ) supérieure à 500 mégapascals au moins dans la zone de la couche de protection (8).

6. Procédé selon l'une quelconque des revendications précédentes, dans lequel l'ébauche de composant de palier (2) est traitée au rouleau sans glissement dans la zone de la couche de conversion (4).

7. Procédé selon l'une quelconque des revendications précédentes, dans lequel le traitement au rouleau est précédé d'une étape de fabrication d'une ébauche de composant de palier, l'ébauche de composant de palier (2) étant fabriquée durant l'étape de fabrication d'une ébauche de composant de palier avec une géométrie d'ébauche, l'ébauche de composant de palier (2) formant après traitement au rouleau le composant de palier (1) avec une géométrie finale.

8. Procédé selon l'une quelconque des revendications précédentes, dans lequel la pression choisie lors du traitement au rouleau sur la couche de conversion (4) est supérieure à 2000 mégapascals.
